Europäisches Patentamt

European Patent Office

Office européen des brevets

(11) Publication number: **0 107 374**
**B1**

# EUROPEAN PATENT SPECIFICATION

(45) Date of publication of patent specification: **11.11.87**

(51) Int. Cl.⁴: **G 01 D 5/30, G 01 D 5/245**

(21) Application number: **83305764.9**

(22) Date of filing: **26.09.83**

(54) Displacement measuring apparatus.

(30) Priority: **25.09.82 GB 8227414**

(43) Date of publication of application:
**02.05.84 Bulletin 84/18**

(45) Publication of the grant of the patent:
**11.11.87 Bulletin 87/46**

(84) Designated Contracting States:
**CH DE FR GB IT LI SE**

(56) References cited:
**EP-A-0 049 764
GB-A-2 054 995
GB-A-2 057 119
US-A-4 096 383
US-A-4 162 399
US-A-4 204 115
US-A-4 242 574
US-A-4 270 050**

(73) Proprietor: **Renishaw plc
Gloucester Street
Wotton-Under-Edge Gloucestershire GL12 7DN
(GB)**

(72) Inventor: **McMurtry, David Roberts
'Undercroft' Tabernacle Pitch
Wotton-Under-Edge Glos (GB)**

Courier Press, Leamington Spa, England.

Description

This invention relates to displacement measuring apparatus and has uses in measuring displacement of a carriage relative to a supporting track e.g., in machine tools.

A known displacement measuring apparatus (US Patent No. 4,242,574) comprises two members subject to relative movement, a scale defined by spaced marks provided on one of the members, a source of light arranged to illuminate the marks so that the marks define reflected light signals, light-receiving means provided on the other member for receiving a plurality of said light signals in predetermined phase relationship, detecting means for detecting the sense of direction of said relative movement responsive to said phase relationship, and fibre-optic means for transmitting said light signals between said light-receiving means and said detecting means.

More specifically, in the known apparatus said fibre-optic means comprise two optic fibre bundles for respective transmission of a first and second said light signal, a first and a second said light-receiving means are constituted by the one ends of the bundles in as much as these ends are situated in close optical scanning relationship with said marks; said phase relationship is constituted by the scale having two rows of said marks in mutually offset relationship; and said determining means include transducers situated at the other ends of the bundles.

Further, the known apparatus is a tape measure, i.e. the member on which the scale is provided in a flexible tape and the other member is a housing into which the tape can be coiled. Two adjacent said scales define division of 1 millimeter or 0.01 inch respectively. The fibres, being resilient, allow said ends of the bundles to be moved relative to said other ends between the two scales without the need to move the transducers. However, the transducers are situated within said housing and the two scales are in close proximity. Hence relatively short said fibres are sufficient to accommodate said movement between the two scales.

It will be appreciated that in many applications, e.g. in the movement of a machine tool carriage, the relative movement between the ends of the bundles is significantly larger than is required in the known tape measure, and the need for bundles of fibres can be a difficulty in these circumstances.

The present invention provides apparatus for measuring displacement between two members subject to relative movement, comprising a scale defined by spaced marks provided on one of the members; a light source; flexible fibre-optic means having a first end arranged to receive incident light from the source; a scale reading head provided on the other member, optically connected to a second end of the fibre-optic means for transmission of the incident light to the scale; the head having means for receiving light signals reflected from the scale at distinct locations such that said light signals are mutually out of phase relative to the spacing of the marks of the scale, and for transmitting the reflected light signals thus received to the second end of the fibre-optic means which then transmits them to the first end thereof; characterised in that the fibre-optic means consists of a single flexible light guide; that the light signals are mutually out of phase by reason of the distinct locations being spaced apart longitudinally along the scale in a mutually out of phase relationship relative to the spacing of the marks of the scale; that means are provided in the scale reading head for ensuring that the light signals reflected from the respective distinct locations have respective different frequencies for transmission along the single light guide; and that means are provided at or near the first end of the guide for separating the reflected light signals from the path of the incident light and for discriminating between the respective different frequencies thereof.

It will be seen that said single guide intrinsically avoids the difficulty associated with bundles of fibres, and the use of a single guide is made possible by the scale reading head which gives the light signals respective different frequencies for transmission along the guide.

European Patent Application No. 0049764 shows displacement measuring apparatus including an opto-electronic means for reading scale marks in phase-shifted order to determine sense of direction but does not show fibre-optic transmission means.

United States Patent No. 4 270 050 shows an opto-electronic pressure transducer and fibre-optic means for leading incident light to and reflected light from the transducer through a single fibre. The incident light is taken from two sources of differing wave length and is combined into the single fibre. The reflected light is taken from the fibre and separated electronically into its constituent wavelengths.

United States Patent No. 4 204 115 shows displacement measuring apparatus including a scale, an optical fibre for transmitting incident light to a lens for focussing the incident light on to a point on the scale, another lens for collecting light reflected from said point and another fibre for transmitting the reflected light from the latter lens.

United Kingdom Patent Application No. 2 054 995 shows an absolute position encoder wherein different tracks of a position-encoding disc are each associated with a respective reflector. The reflectors are illuminated by a white light which the different reflectors reflect at different frequencies thereby creating colour-encoded light signals. After passing through the tracks for position-encoding the light signals are received by respective optical fibres arranged to combine the light signals into a single fibre for transmission to a remote location where the combined light is colour-decoded for identification of the respective tracks. Since the apparatus is an absolute encoder no reception in predetermined phase relationship is involved.

Fig. 1 is a diagrammatic elevation of parts of a machine tool embodying the apparatus,

Fig. 2 is an enlarged detail of Fig. 1 showing an optical part of the apparatus,

Fig. 3 is a section on the line III—III in Fig. 2,

Fig. 4 is a diagram of an electronic part of the apparatus,

Fig. 5 is a signal diagram,

Fig. 6 shows a modification of Fig. 2.

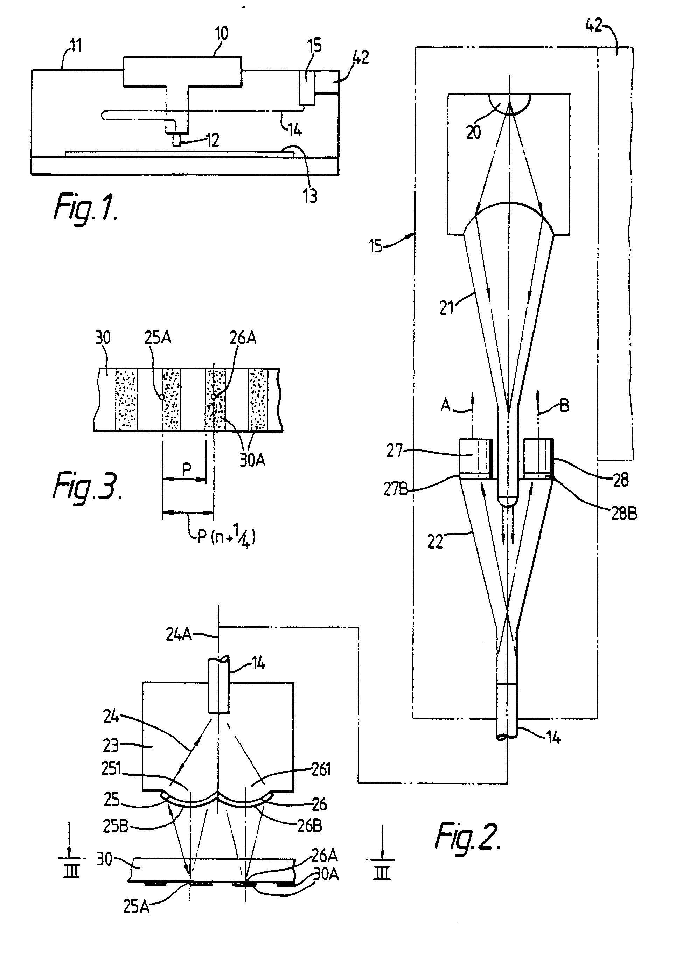

The machine (Fig. 1) comprises a carriage 10 moveable along a track 11 and supporting a reading head 12 moveable together with the carriage relative to an elongate grid or scale 13 secured to the track. The reading head 12 is connected by a single optical fibre 14 to a control unit or input/output 15 mounted on the track or other fixed structure of the machine.

The unit 15 (Fig. 2) has a random light source 20 illuminating the wide end of a first convergent transparent member 21 whose narrow end is connected to the centre of the wide end of a second convergent transparent member 22 whose narrow end is contiguous with the guide 14. Thus scattered light entering the member 21 is transmitted through the member 22 to the guide 14. In the reading head 12 the guide 14 is connected to one end of a transparent member 23 such that a divergent cone of 24 light from the guide 14 enters the member 23 on an axis 24A. At its other end, the member 23 is formed to define two light receiving means or lenses 25, 26 positioned to transmit light from the cone 24 as two convergent beams focused at 25A, 26A on to the grid 13.

The grid 13 comprises a glass plate 30 at the underside of which are defined grid lines 30A extending transversely to the length of the grid. The head 12 is situated above the plate 30 and the foci 25A, 26A lie at the underside of the plate 30, i.e. in the plane of the lines 30A. If either of the foci 25A, 26A meets a said line 30A, the light is reflected from the line back into the guide 14 where it will emerge at the wide end 22A of that guide to illuminate two spaced apart photodiodes 27, 28. The lenses 25, 26 are coated with filters 25B, 26B of different colours and the photodiodes 27, 28 are provided with filters 27B, 28B of corresponding colours so that the photodiode 27 receives only light reflected through the lens 25, and the photodiode 28 receives only light reflected through the lens 26.

The lenses 25, 26 are positioned for the foci 25A, 26A to be spaced apart in the direction of the length of the grid by a distance $p(n + 1/4)$ where p = the pitch of the lines 30A and $n = 1$ or an even multiple thereof. In other words the foci are out of phase in relation to the grid by a quarter of a pitch, or 90 degs., so that when the one focus is at the edge of one grid and illumination of one of the diodes 27, 28 commences, the other focus is at the middle of another grid line and illumination of the other diode is at a maximum.

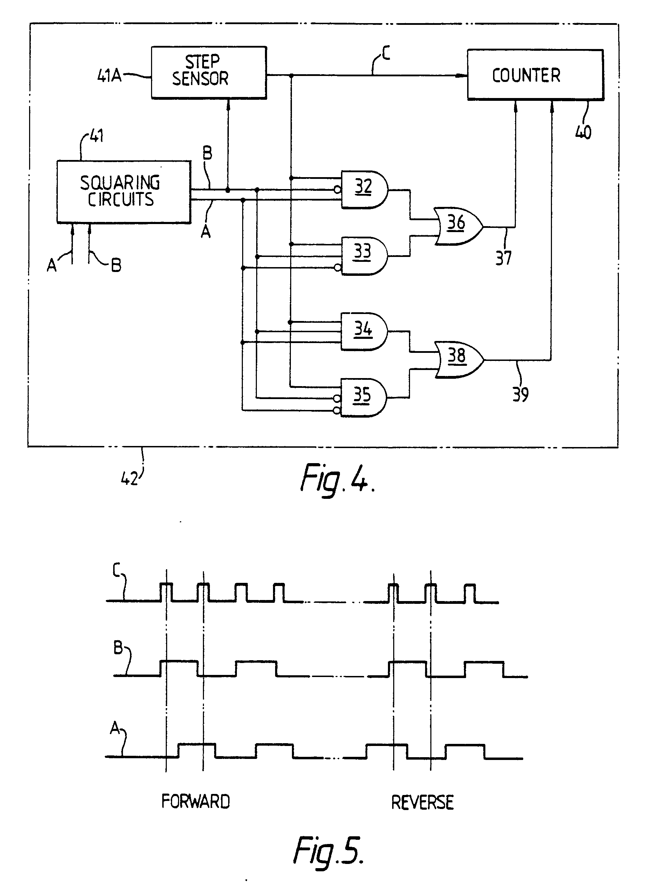

The outputs, denoted A, B, of the diodes 27, 28 (Fig. 4) are substantially sinusoidal and are led through squaring circuits 41 to square the signals A, B (see also Fig. 5) one of which, B, is fed to a step-sensing circuit 41A having an output C which goes high in response to the signal B having a rising or falling step and remains high for a period slightly less than a quarter of the period of the signals B. The signals A, B, C are each led to each of four AND gates 32, 33, 34, 35.

It will be noted (Fig. 5) that when the signals A, B are generated by travel of the carriage in one direction, say forwards, the signals A, B are at different levels for the duration of the signal C while, when the carriage travels in the opposite i.e. reverse direction, the signals A, B are at the same level. Accordingly, the first two AND gates 32, 33 are arranged to have outputs which go high when the signal C is high and one of the signals A, B is high while the other is low, and the second two gates, 34, 35 are arranged to have outputs which go high when the signal C is high and both signals A, B are either high or low. The outputs of the gates 32, 33 are joined at an OR gate 36 to provide a single "forward" signal 37 while the outputs of the gates 34, 35 are joined to an OR gate 38 to provide a single "reverse" signal 39.

The periods of the signal C are counted by a counter 40 whose output is therefore a measure of the displacement of the carriage 10 along the track 11 in terms of a multiple of the half-periods of the signal B.

The counter 40 is reversible for the direction of count to be either "up" or "down". The signals 37, 39 are connected to the counter 40 to initiate the "up" count when the signal 37 is high and to initiate the "down" count when the signal 39 is high. Reversible counters whose direction can be controlled by separate signals are known *per se* and are therefore not particularly described.

It is an advantage of the invention that the unit 15 can be mounted on fixed structure of the machine in a position sufficiently remote from the track 11 to be free from adverse environmental influences, i.e. dirt, temperature or vibration. Another advantage is that the connection to the unit 15 comprises only a single light guide, compared to a system where the direction detecting means, including a light source, is mounted directly adjacent the reading head and a flexible multicore electrical cable is necessary for taking the current supply to the light source and for taking the forward and reverse signals back to the fixed structure.

The lenses 25, 26 constitute light signal-receiving means 251, 261 for the light emanating from the grid 13. The light from the source 20 is a mixture of frequencies, e.g. is ordinary white light from a conventional bulb. Incident radiation from the source 20 is divided by the filters 25B, 26B into respective frequencies. Reflected radiation from the grid 13 has these different frequencies and the lenses 25, 26 act to combine the two frequencies by directing the reflected radiation back into the guide 14. The diodes 27, 28, circuits 40, sensor 41, and gates 32 to 36 and 38 are a means 42 for detecting which of the waves A, B is leading the other. The filters 27B, 28B are means included in the detecting means 42 for discriminating between said two frequencies.

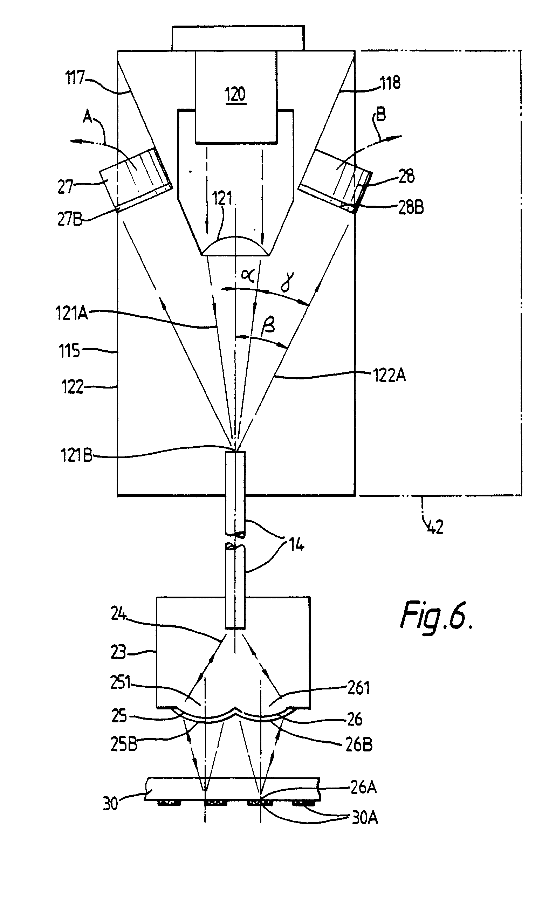

Fig. 6 shows an input/output unit 115 generally corresponding to the unit 15 but comprising a member 122 of transparent material optically connected to the guide 14. The member 122 supports a light source 120 directing incident light on to a lens 121 producing a convergent cone 121A defined by an angle a and having a focus 121B at or near the end of the guide 14. Reflected light from the guide 14 has a divergent cone 122A coaxial with the cone 121A and defined by an angle β equal to the maximum angle of internal reflection of the guide 14. The optical properties of the lens 121 are so chosen that the angle a of the cone 121A is smaller than the angle B of the cone 122A by an angle γ sufficiently large to allow a satisfactory volume of the reflected light to be received at locations outside the periphery of the lens 121 at recesses 117, 118 adapted to receive the filters 27B, 28B and diodes 27, 28 described with reference to Fig. 2.

In a modification, not illustrated, the reading head 12 has two input stations each comprising an index grating and a lens system arranged to pass collimated light through the index grating on to the grid for reflection therefrom.

In a further modification, not illustrated, the reading head has a prism arranged to divide white light from the guide 14 into two frequency bands which are then focused onto the grid 13 by lenses such as the lenses 25, 26 which, in turn, receive the reflected light for return transmission through the prism to the guide.

## Claims

1. Apparatus for measuring displacement between two members (10, 11) subject to relative movement, comprising a scale (13) defined by spaced marks (30A) provided on one of the members (11); a light source (20, 120); flexible fibre-optic means (14) having a first end arranged to receive incident light from the source (20, 120); a scale reading head (12) provided on the other member (10), optically connected to a second end of the fibre-optic means (14) for transmission of the incident light to the scale (13); the head (12) having means (251, 261) for receiving light signals reflected from the scale (13) at distinct locations (25A, 26A) such that said light signals are mutually out of phase relative to the spacing of the marks (30A) of the scale (13), and for transmitting the reflected light signals thus received to the second end of the fibre-optic means (14) which then transmits them to the first end thereof. characterised in that the fibre-optic means (14) consists of a single flexible light guide; that the light signals are mutually out of phase by reason of the distinct locations (25A, 26A) being spaced apart longitudinally along the scale (13) in a mutually out of phase relationship relative to the spacing of the marks (30A) of the scale; that means (25B, 26B) are provided in the scale reading head (12) for ensuring that the light signals reflected from the respective distinct locations (25A, 26A) have respective different frequencies for transmission along the single light guide (14); and that means (22, 122) are provided at or near the first end of the guide (14) for separating the reflected light signals from the path of the incident light and for discriminating between the respective different frequencies thereof.

2. Apparatus according to claim 1, including detecting means (42) responsive to the phase relationship of the separated discriminated light signals for detecting the sense of direction of the relative movement of the members (10, 11).

3. Apparatus according to claim 1 or claim 2, wherein the light signal-receiving means (251, 261) is constituted by lenses (25, 26) focused at their one sides on to the space apart locations (25A, 26A) on said scale (13).

4. Apparatus according to claim 3 wherein said lenses (25, 26) are focused at their other sides on to the second end of the single light guide (14).

5. Apparatus according to claim 4, wherein said light source (20) is connected to the first end of said guide (14) so as to illuminate said marks (30A) through said lenses (25, 26) and said lenses co-operate to focus incident light on to the said spaced apart locations (25A, 26A) and receive reflected light therefrom.

6. Apparatus according to any one of claims 3 to 5, wherein said means for ensuring that the light signals have different frequencies comprises colour filters (25B, 26B) provided at said lenses (25, 26).

7. Apparatus according to any one of claims 3 to 6, comprising a transparent member (23), wherein the second end of the fibre (14) is connected to one end of said transparent member (23), and said transparent member is formed at another end thereof to define said lenses (25, 26).

## Patentansprüche

1. Gerät zum Messen der Verschiebung zwischen zwei einer Relativbewegung ausgesetzten Bauteilen (10, 11), mit einer an einem (11) der Bauteile angeordneten, durch mit gegenseitigen Abständen angeordneten Marken (30A) gebildeten Skala (13), einer Lichtquelle (20, 120), einem flexiblen faseroptischen Organ (14), der mit seinem einen Ende von der Lichtquelle (20, 120) einfallendes Licht empfängt, einem am anderen Bauteil (10) angeordneten Skalenablesekopf (12), der mit dem anderen Ende des faseroptischen Organs (14) optisch verbunden ist, um das einfallende Licht auf die Skala (13) zu leiten, wobei der Ablesekopf (12) Mittel (251, 261) zum Empfang von von der Skala (13) an verschiedenen Positionen (25A, 26A) reflektierten Lichtsignalen, derart, daß diese Lichtsignale mit Bezug auf den Abstand der Marken (30A) der Skala (13) gegenseitig phasenverschoben sind, und zum Übermitteln der so empfangenen reflektierten Lichtsignale zu dem anderen Ende des phaseroptischen Organs (14) aufweist, der sie dann an dessen eines Ende übermittelt,

dadurch gekennzeichnet, daß das phaseroptische Organ (14) aus einem einzigen flexiblen Lichtleiter besteht, daß die Lichtsignale dadurch gegenseitig phasenverschoben sind, daß die gegenseitigen Abstände der verschiedenen Positionen (25A, 26A) in Längsrichtung entlang der Skala (13) mit Bezug auf die Abstände der Marken (30A) der Skala gegenseitig phasenverschoben sind, daß Mittel (25B, 26B) im Skalenablesekopf (12) vorgesehen sind, um sicherzustellen, daß die von den betreffenden verschiedenen Positionen (25A, 26A) reflektierten Lichtsignale entsprechend unterschiedliche Frequenzen zur Übertragung entlang des einziges Lichtleiters (14) haben, und daß Mittel (22, 122) an oder nahe dem einen Ende des Lichtleiters (14) vorgesehen sind, um die reflektierten Lichtsignale aus dem Pfad des einfallenden Lichtes abzulenken und zwischen deren verschiedenen Frequenzen zu unterscheiden.

2. Gerät nach Anspruch 1, mit auf die Phasenverschiebung der abgelenkten unterschiedenen Lichtsignale ansprechenden Fühlermittel (42) zum Erfassen des Richtungssinnes der Relativbewegung zwischen den Bauteilen (10, 11).

3. Gerät nach Anspruch 1 oder 2, wobei die Mittel (251, 261) zum Empfang der Lichtsignale durch Linsen (25, 26) gebildet sind, die auf ihren einen Seiten auf die auseinanderliegenden Positionen (25A, 26A) auf der Skala (13) fokussiert sind.

4. Gerät nach Anspruch 3, wobei die Linsen (25, 26) auf ihren anderen Seiten auf das andere Ende des einzigen Lichtleiters (14) fokussiert sind.

5. Gerät nach Anspruch 4, wobei die Lichtquelle (20) mit dem einen Ende des Lichtleiters (14) verbunden ist, so daß die Marken (30A) durch die Linsen (25, 26) beleuchtet werden, und daß die Linsen im Sinne einer Fokussierung einfallenden Lichtes auf die auseinanderliegenden Positionen (25A, 26A) und des Empfangs von von dort reflektiertem Licht miteinander zusammenwirken.

6. Gerät nach einem der Ansprüche 3 bis 5, wobei die Mittel zur Sicherstellung der unterschiedlichen Frequenzen der Lichtsignale Farbfilter (25B, 26B) aufweisen, die an den Linsen (25, 26) angeordnet sind.

7. Gerät nach einem der Ansprüche 3 bis 6, mit einem transparenten Bauteil (23), wobei das andere Ende des Lichtleiters (14) mit einem Ende des transparenten Bauteils (23) verbunden ist, und daß das transparente Bauteil an seinem anderen Ende so gestaltet ist, daß es die genannten Linsen (25, 26) bildet.

**Revendications**

1. Appareil pour mesurer le déplacement entre deux éléments (10, 11) mobiles l'un par rapport à l'autre comprenant: une échelle (13) formée de marques espacées (30A) faites sur un des éléments (11); une source lumineuse (20, 120); un moyen flexible à fibre optique (14) ayant une première extrémité conçue pour recevoir la lumière incidente arrivant de la source (20, 120); une tête de lecture de l'échelle (12) prévue sur l'autre élément (10) et qui est connectée optiquement à la seconde extrémité du moyen à fibre optique (14) pour transmettre la lumière incidente vers l'échelle (13); où la tête (12) est pourvue de moyens (251, 261) pour recevoir les signaux lumineux réfléchis sur l'échelle (13) à des emplacements distincts (25A, 26A) tels que lesdits signaux lumineux soient mutuellement déphasés par rapport à l'espacement des marques (30A) de l'échelle (13) et pour transmettre les signaux lumineux réfléchis ainsi reçus sur la seconde extrémité du moyen à fibre optique (14) qui les transmet alors vers sa première extrémité;

caractérisé en ce que le moyen à fibre optique (14) consiste en un guide de lumière unique flexible; que les signaux lumineux sont mutuellement déphasés du fait que les emplacements distincts (25A, 26A) sont espacés dans le sens longitudinal de l'échelle (13) de manière à être déphasés par rapport à l'espacement des marques (30A) de l'échelle; que des moyens (25B, 26B) sont prévus sur la tête de lecture de l'échelle (12) pour que les signaux lumineux réfléchis des emplacements distincts respectifs (25A, 26A) aient des fréquences propres différentes qui soient transmises le long du guide de lumière unique (14); et que des moyens (22, 122) sont prévus sur ou prés de la première extrémité du guide (14) pour dévier les signaux lumineux réfléchis du chemin parcouru par la lumière incidente et pour les différencier selon leurs fréquences respectives.

2. Appareil selon la revendication 2, comportant une moyen de détection (42) sensible à la relation de phase existant entre les signaux lumineux déviés et différenciés dans le but de détecter la direction du déplacement relatif des éléments (10, 11).

3. Appareil selon la revendication 1 ou la revendication 2, où les moyens pour recevoir le signal lumineux (251, 261) sont constitués par des lentilles (25, 26) focalisées sur un de leurs côtés sur les emplacements espacés (25A, 26A) de ladite échelle (13).

4. Appareil selon la revendication 3, où lesdites lentilles (25, 26) sont focalisées sur leur autre côté sur la seconde extrémité du guide de lumière unique (14).

5. Appareil selon la revendication 4, où ladite source lumineuse (20) est connectée à la première extrémité dudit guide (14) de manière à éclairer lesdites marques (30A) à travers lesdites lentilles (25, 26) et où lesdits lentilles agissent pour focaliser la lumière incidente sur lesdits emplacements espacés (25A, 26A) et pour recevoir la lumière se réfléchissant sur ceux-ci.

6. Appareil selon l'une quelconque des revendications 3 à 5, où lesdits moyens prévus pour conférer aux signaux lumineux des fréquences différentes comprennent des filtres colorés (25B, 26B) disposés sur lesdites lentilles (25, 26).

7. Appareil selon l'une quelconque des revendications 3 à 6 comprenant un élément transparent (23), où la seconde extrémité de la fibre (14) est connectée à une des extrémités dudit élément transparent (23) et où ledit élément transparent est conçu pour que son autre extrémité constitue lesdites lentilles (25, 26).

*Fig.1.*

*Fig.3.*

$$P(n+\tfrac{1}{4})$$

*Fig.2.*

*Fig. 4.*

FORWARD                    REVERSE

*Fig.5.*

Fig.6.